Europäisches Patentamt

European Patent Office

Office européen des brevets

(11) Publication number: **0 207 637**
**B1**

## EUROPEAN PATENT SPECIFICATION

(45) Date of publication of the patent specification:
**06.09.89**

(51) Int. Cl.⁴: **B 65 B 31/00, B 65 D 81/20, B 65 B 25/06**

(21) Application number: **86304191.9**

(22) Date of filing: **02.06.86**

(54) Process for packaging fresh meat.

(30) Priority: **03.06.85 US 740571**

(43) Date of publication of application:
**07.01.87 Bulletin 87/2**

(45) Publication of the grant of the patent:
**06.09.89 Bulletin 89/36**

(84) Designated Contracting States:
**AT BE CH DE FR GB IT LI LU NL SE**

(56) References cited:
**DE-A- 1 486 662**
**DE-A- 1 511 924**
**DE-A- 1 916 749**
**DE-A- 3 034 169**
**GB-A- 1 490 627**
**US-A- 3 397 068**
**US-A- 3 681 092**
**US-A- 4 058 953**

(73) Proprietor: **W.R. Grace & Co.-Conn. (a Connecticut corp.), Grace Plaza 1114 Avenue of the Americas, New York New York 10036 (US)**

(72) Inventor: **Cheng, Chin S., 6600 Candlewood, Oklahoma City Oklahoma 73132 (US)**
Inventor: **McCarthy, Michal J., 2325 NW 112th Terrace, Oklahoma City Oklahoma 73120 (US)**
Inventor: **Balsano, Joseph A., 8108 NW 30th Street, Bethany Oklahoma 73008 (US)**

(74) Representative: **Allen, William Guy Fairfax et al, J.A. KEMP & CO. 14 South Square Gray's Inn, London WC1R 5EU (GB)**

## Description

This invention relates to the packaging of fresh meats for shipment from the packer to a point of retail sale. More particularly, but not by way of limitation, it relates to a process and a special novel container by the use of which fresh pork can be maintained in an attractive, caseready condition from the time of packing, up to the time of sale to the consumer.

It is known that meat can be maintained against spoilage by packaging the meat in a relatively air free environment. Carbon dioxide has been employed for this purpose by using it to displace some of the air around the packaged meat cuts. Vacuum packing has also been used. These techniques used by packers have not been totally successful, and many types of original packaging require various labour intensive preparation measures on the part of the butcher at the retail outlet before the meat can be attractively displayed to customers.

Part of the difficulty experienced is that discoloration occurs where a significant time period elapses between original packing and placement of the meat in the meat case for sale, or the original package becomes damaged or unsightly or a complete repackaging is necessitated to achieve satisfactory display. In many instances, the final container into which the butcher will transfer the meat for display in the meat case is a styrofoam tray with a plastic film overwrap, but this containerization has not been thought to be satisfactory as original packaging suitable for use by the packer due to the relatively short shelf life before spoilage which is exhibited by fresh meat so packaged.

In some European markets, meats have been packaged in a relatively high oxygen atmosphere for the purpose of maintaining a red coloration indicative of freshness. The increased oxygen, however, accelerates oxidative reactions which cause the meat to develop undesirable oxidized flavour.

US-A 3 681 092 disclosures a method of packaging fresh meat in which the meat is cut to a size and weight suitable for display and is placed on a support tray. The tray is then covered with a heat shrink film and is flushed e.g. with carbon dioxide but which is passed through «skip seals» in the tray these then being left open. The thus treated tray, with the meat thereon, is then placed in a larger container and air is removed from this container and is also removed from the unsealed packs through the skip seals. The larger container is subsequently sealed.

While such a method is reasonably satisfactory it does not produce entirely satisfactory results and is rather laborious to carry out. It is now proposed, according to the present invention, to provide a process for packaging fresh meat in a condition for subsequent storing and ultimate retail display, said method comprising the steps of cutting fresh meat into cuts of a size, shape and weight to be packaged and displayed to retail purchasers in a retailer's meat case; placing at least one of said meat cuts on each of a plurality of supporting trays sized for deposit and display in said retailer's meat case; surrounding the meat cuts on the trays with a preselected gaseous atmosphere; thereafter covering each of the trays and the meat cut or cuts on each tray with a flexible, gas-permeable film of transparent synthetic resin material so that the film encloses the preselected gas atmosphere surrounding the meat cuts and fits snugly and tightly over the meat cuts and is sealed to the associated tray; placing said trays in a gas impermeable container; removing air from the inside of the container and surrounding the trays, while leaving said preselected gaseous atmosphere surrounding the meat on each tray, and filling the space inside the impermeable container and surrounding the trays with a controlled gaseous atmosphere, such that the gas permeable film neither bursts nor wrinkles during the time the tray is within said container; and sealing said container to retain the controlled gaseous atmosphere therein.

With such a process fresh meats may be packaged in small, consumer-attractive, case-ready packages contained within a gas filled exterior packaging system which insures that the meat will retain en attractive red colouration and will remain in a fresh unspoiled condition over an extented shelf life period of at least 20 days. No handling or re-packaging the butcher at the retail outlet is required.

In carrying out the process of the invention, the animal from which the package meats are to be derived is slaughtered and the carcass is chilled and sub-divided into primal cuts. The primal cuts are then further sub-divided into cuts which have a configuration, weight and size corresponding to the ultimate cuts which are to be displayed to, and brought buy the consumer. In this way, no further cutting, trimming or the like is required by the retailer prior to display. Using the packaging thus formed, the retailer is enabled to open one or more of the containers forming the compound secondary package, and then have a plurality of the primary packages available and ready for display in the meat case. As previously pointed out, the primary packages are made up to contain meat cuts which have been cut to the size and weight characteristics of the meat cuts customarily marketed to the consumer. The primary packaging itself is also such as to have an aesthetic appeal to the consumer.

The meat, and especially fresh pork, can be preserved in an healthy, unspoiled condition and for an extended period of time while remaining as attractive as when freshly cut. It is possible, with a process according to the present invention, to ensure that the meat does package does not become discoloured, and the microbial activity on the meat cuts is maintained at acceptable level over an extented period of time which is more than adequate to facilitate display and sale of the meat to the consumer, after allowing for a period of shipment from the packer to the retailer, and placement by the retailer on display for purchase by the consumer.

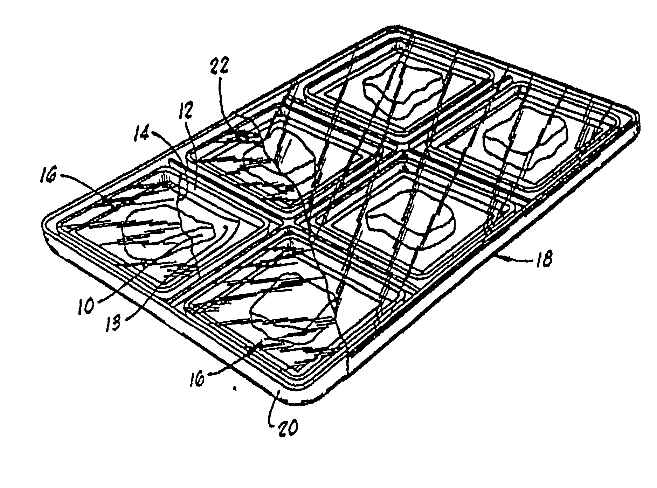

Additional objects and advantages of the invention will become apparent as the following detailed description of the invention is read in conjunction with the accompanying drawing which illustrates a preferred embodiment of the unique compound package developed in carrying out the processing of the invention.

The sole figure of the drawings is a perspective view of a preferred embodiment of a compound package which is developed by using as a secondary container, a thermoformed tray provided with an impermeable film overwrap for purposes of containing a plurality of the primary packages developed in an early stage of the process of the invention.

The description of the method by which fresh meat cuts are packaged according to the invention will be aided by reference to the sole figure of the drawings which shows the compound package developed in carrying out the method. In the initial step the animal carcass is subdivided into primal cuts. The fresh meat primal cuts are then tested to determine the pH of these cuts. The testing is carried out primarily for the purpose of ascertaining which of the primal cuts have a pH of at least about 5.6. We have determined that pork cuts which have a pH below about 5.6 are adversely affected by the predominantly carbon dioxide atmosphere in which the cuts are to be packaged, in that the cuts turn an unsightly grey colour in a relatively short time of exposure to carbon dioxide. Factors which appear to affect the pH of the meat are the time of year that the animal is slaughtered, the conditions of slaughter, including the trauma encountered, the type of feeding of the slaughtered animal which has been carried out and genetics.

By utilizing a treatment entailing the application of a suitable pH-elevating aqueous buffer solution to those cuts which, upon testing, are found to have a pH of less than 5.6 but higher than 5.2, the pH of these cuts can be elevated to at least as high as about 5.6, and the described discoloration thereby substantially avoioded and the yield of case-ready packaged product increased. An especially effective and preferred buffer solution for this purpose is basically a four-component aqueous solution which includes, in addition to water, (a) a phosphate compound selected from the group which includes alkali metal (preferably sodium and potassium), orthophosphates, pyrophosphates, tripolyphosphates and hexametaphosphates; (b) a reducing compound capable of retaining the heme iron of the meat pigment in the meat in the ferrous state, and of retarding the oxidative process in the meat; and (c) a chelating or sequestering agent capable of sequestering metal ions present in the meat and constituting undesirable pro-oxidants. Reducing compounds which have been found to be especially effective include ascorbic acid, isoascorbic (erythorbic) acid and the sodium and potassium salts of these acids. A sequestering agent or compound which has been found to be especially effective is citric acid, although other food grade sequestering agents can also be used.

In utilizing the described aqueous buffer solution, the amounts of these components which are incorporated into the meat, based on the total weight of the treated product, are from about 0.1 to about 0.5 weight percent of the phosphate compound; from about 0.01 to about 0.05 weight percent of the reducing compound, and from about 0.01 to about 0.1 weight percent of the sequestering agent. Preferably, the treated meat will contain from about 0.2 to about 0.4 weight percent of the phosphate compound, from about 0.02 to about 0.04 weight percent of the reducing compound and from about 0.02 to about 0.08 weight percent of the sequestering compound. The aqueous buffer solution which is utilized will vary in its concentration of the described three components according to which of several application modes is utilized to incorporate the active compounds into the meat. Thus, the primal cuts can be pumped to inject aqueous buffer solution in a quantity of from about 7 weight percent to about 12 weight percent. Where marination is used on smaller subdivided cuts, such as pork chops, as hereinafter described, then a lesser amount of the aqueous buffer solution will be incorporated into the meat, and to bring the concentration of the three active components in the meat to the level desired as hereinbefore described, the concentration of these components in the buffer solution is substantially higher than where injection and pumping of the primal cuts is employed.

Those primal cuts which have a natural or a buffer-adjusted pH of at least about 5.6 are next subjected to the subsequent steps of the packaging method. The described primal cuts are further subdivided into case-ready cuts 10 which correspond in shape and weight to that which is optimum for consumer display at the retail outlet as illustrated in the drawing. It should be pointed out that if desired, the tested primal cuts which have a pH lower than about 5.6, but higher than about 5.2, can be subdivided into case-ready cuts, such as pork chops or the like, and these subdivided cuts can then be either marinated or sprayed with the described aqueous buffer solution to elevate the pH of the cuts adequately (to at least about 5.6) to avoid the undesirable discoloration hereinbefore described. Where spraying of the smaller cuts is utilized, the sprayed product will generally contain from about 2.0 weight percent to about 4.0 weight percent of the aqueous buffer solution as evidenced by the total weight increase resulting. In the marinating process, from about 2 weight percent to about 4 weight percent of the aqueous buffer solution is absorbed in the meat.

The secondary cuts which have a natural or adjusted pH of at least about 5.6 are then placed individually, or in superimposed layers, upon a relatively small styrofoam tray of the type now commonly used for displaying meat cuts in the meat cases of retail outlets, such as supermarkets. The styrofoam tray 12 has an open top and a peripheral rim, and is preferably provided with a soaker pad 13 in the bottom of the tray for absorbing exudate, blood and juices from the meat cuts. The construction of a typical tray and soaker pad is illustrated in the drawing.

The styrofoam tray 12 carrying the meat cuts 10 is then passed into an elongated synthetic resin tube through which carbon dioxide gas is continuously flushed. The tube is made of a plastic film which is gas permeable, and preferably surrounds an elongated conveyor upon which the styrofoam trays are moved longitudinally within the tube. The tube can be preformed, or it may be formed in the process at the time the styrofoam trays are moving on the conveyor. After one of the styrofoam trays bearing the meat cuts enters the tube, the tube is severed at a point in advance of one end ot the tray, and this end of the tube is then sealed by bringing the severed edges together to effect closure.

After closure of one end of the tube, flushing with $CO_2$ continues for a brief interval ti displace air from the interior of the tube adjacent the closed end and over the styrofoam tray. The tube is then severed at a location spaced from the closed end and adjacent the side of a respective styrofoam tray which is on the opposite side thereof from the closed end. The synthetic resin gas permeable film making up the tube is then pulled down, and an overwrapping process is completed in which the film 14 is pulled down relatively snugly and tightly about the meat and is heat sealed or otherwise secured at its free edges beneath the underside of the styrofoam tray. By the procedure described to this point, a series of primary case-ready packages 16 are formed.

Several of the small case-ready primary packages 16 containing meat cuts 10 positioned in the predominantly $CO_2$ atmosphere are then placed in a larger container to form a compound secondary package 18. In a preferred embodiment of the invention, the first step in the preparation of the secondary package is the placement of a number of the styrofoam trays 12 upon a larger tray which is preferably a thermoformed tray 20 having a number of wells or recesses configured to accomodate a plurality of the primary packages. A typical thermoformed tray 20 suitable for use is shown in the drawing. Preferably from two to ten of the primary packages are located on the larger thermoformed tray, and it can be made to support as many as sixteen of the primary packages. This latter tray, called a secondary tray, is then subjected to a sealing process in which a pas impermeable film 22 of synthetic resin is used for enclosing all of the smaller primary packages 16. In the course of completing the sealing of the secondary tray, a vacuum is initially developed within the package formed by the secondary tray and its gas impermeable closure film so as to remove a substantial amount of the air (at least about 40 volume percent) from the interior of this compound package. Care is exercised, however, to maintain the vacuum at a level sufficiently low that the predominantly carbon dioxide gas within the primary packages is not expanded to the point of bursting or causing excessive stretching of the gas permeable film 14 used to sealingly close the styrofoam trays 12. In this way, the aesthetic appearance of the primary package is maintained. Generally, a vacuum of about 38 cms of mercury is not exceeded.

After the compound secondary package 18, which includes the secondary thermoformed tray 20 and its gas impermeable closure film 22, has been evacuated to remove at least about 40 volume percent and preferably about 70 volume percent of the air, the interior of the compound package is flushed with carbon dioxide. As the partial vacuum which has been developed within the package is relieved and the pressure is restored to approximately atmospheric by flushing with carbon dioxide, the result is that a low oxygen, high carbon dioxide atmosphere is established within the compound secondary package. The oxygen content within the secondary package will generally be between about 2 volume percent and 13 volume percent, with the preferred oxygen concentration being between about 5 volume percent and 10 volume percent. The gaseous atmosphere in the compound secondary package will contain from about 35 volume percent to about 90 volume percent carbon dioxide, and preferably from about 50 volume percent to about 75 volume percent. The package is, of course, sealed after flushing with carbon dioxide to establish approximately atmospheric pressure in the compound package.

Several of the compound secondary packages, each of which includes a gas impermeable thermoformed tray sealingly covered with a gas impermeable synthetic resin film, and containing a plurality of the small overwrapped styrofoam trays of the primary packages, are then placed within a large carton or box preparatory to shipment of the carton or box to the retailer.

The containerization thus developed protects the compound fresh meat packaging from mechanical damage during shipment, and upon arrival at the retailers, it can be easily opened to permit one or more of the compound secondary packages to be removed. The other compound packages can be left in the carton or box and placed on standby shelving or in storage to await later placement in the meat box for immediate sale. In other words, the retailer, without further processing or without any alteration of the packaging can take out one of the compound packages, leaving the others in the carton, and then remove from the compound package the plurality of small styrofoam tray primary packages which are in attractive condition, and ready for placement and display in the meat box.

We have determined that meats so packaged arrive at the retail outlet in a fresh condition with a low microbial count, and have an attractive red appearance substantially equal to that which has been achieved by other packaging methods which, in most cases, require some further packaging and handling by the butcher at the point of retail sale. Convenience to the retailer is greatly enhanced, and the cost to the consumer is reduced because the packer can develop the described compound packaging and protective gasification of the meats more economically than the meat can be rehandled by the butcher at the point of retail. The packages developed in the manner described have been found to have a shelf life of at least 20 days when stored and shipped at a temperature of from about $-1°$ to about $+1°$. When the primary packages are removed and placed on display in a meat counter, the meat will keep for an additional three days before any detectable spoilage or unacceptable increase in microbial content occurs, and the meat remains substantially as fresh in appearance as when first cut at the packer. In sum, the consumer is presented with relatively more attractive, yet less expensive meat as a result of the packaging technique.

As an alternate method of practicing the present invention, a carbon dioxide atmosphere is developed around the fresh meat cuts placed on the styrofoam primary tray by sprinkling a small amount (from 1 to 2 grams) of solid carbon dioxide crystals around the meat on the tray. The tray is then overwrapped by any conventional presently known method, with the gas permeable film used for overwrapping pulled loosely across the meat slices so as to be able to undergo a slight expansion as the solid carbon dioxide sublimes and displaces air from the interior of the primary package through the gas permeable film.

The process of the invention can also be altered at the step of development of the secondary package. When this alternate technique is used, the primary packages are placed into a gas impermeable flexible bag. Most of the air within the bag is then removed by an appropriate combination of evacuation, followed by $CO_2$ flushing. Preferably, a substantial portion of the air is initially removed by first flushing the bag with $CO_2$, then evacuating the bag, being careful not to burst or cause excessive wrinkling of the overwrap of the primary trays as previously described. The bag is then reflushed with $CO_2$ to restore atmospheric pressure within the bag. The bag, constituting the secondary container in the case of this embodiment, is then placed in a suitable carton for shipment to the retailer. The described use of a large flexible bag for containing many of the primary packages is less desirable than the use of thermoformed tray-type secondary containers, since the latter method enables the retailer to select one of the compound packages made utilizing the tray-type secondary containers without the necessity to destroy or debilitates the predominantly carbon dioxide atmosphere around all of the other primary packages. In other words, the retailer has greater flexibility in selecting a limited number of primary packages without thereby destroying or impairing the predominantly carbon dioxide protection afforded the primary packages contained in others of the compound packages using tray-type secondary containers when the first-described preferred method of packaging is employed.

## Claims

1. A process for packaging fresh meat in a condition for subsequent storing and ultimate retail display, said method comprising the steps of cutting fresh meat into cuts of a size, shape and weight to be packaged and displayed to retail purchasers in a retailer's meat case; placing at least one of said meat cuts on each of a plurality of supporting trays sized for deposit and display in said retailer's meat case; surrounding the meat cuts on the trays with a preselected gaseous atmosphere; thereafter covering each of the trays and the meat cut or cuts on each tray with a flexible, gas-permeable film of transparent synthetic resin material so that the film encloses the preselected gas atmosphere surrounding the meat cuts and fits snugly and tightly over the meat cuts and is sealed to the associated tray; placing said trays in a gas impermeable container; removing air from the inside of the container and surrounding the trays, while leaving said preselected gaseous atmosphere surrounding the meat on each tray, and filling the space inside the impermeable container and surrounding the trays with a controlled gaseous atmosphere, such that the gas permeable film neither bursts nor wrinkles during the time the tray is within said container; and sealing said container to retain the controlled gaseous atmosphere therein.

2. A process for packaging fresh meat as defined in claim 1 wherein the meat cuts on the supporting trays are surrounded with a preselected gaseous atmosphere by placing each tray in an elongated, open-ended tube of a gas permeable, transparent, synthetic film; passing the gases making up said preselected gaseous atmosphere through the elongated, open-ended tube from one end thereof toward the other; closing the tube adjacent one side of each said trays, while continuing to flush air out of the elongated, open-ended tube by passing the gases making up the preslected gaseous atmosphere into the open end thereof, then closing the tube on the opposite side of the respective tray from the location where the tube is first closed to completely enclose said gaseous atmosphere and meat cuts.

3. A process for packing fresh meat according to claim 1 or 2, wherein after removing air from the gas impermeable container, the control led gaseous atmoshere filled thereinto is at substantially atmospheric pressure.

4. A process according to claim 1, 2 or 3, wherein the controlled gaseous atmosphere introduced into said gas impermeable container is carbon dioxide.

## Patentansprüche

1. Verfahren zum Verpacken von Frischfleisch in einer zur anschließenden Lagerung und schließlich zum Anbieten in Einzelhandelsgeschäften geeigneten Form, wobei das Verfahren folgende Schritte umfaßt: Schneiden des frischen Fleisches in Stücke einer Größe, einer Form und eines Gewichtes zur Abpackung und zum Anbieten an Endverbraucher in der Fleischtruhe eines Einzelhandelsgeschäftes; Aufbringen von mindestens einem der besagten Fleischstücke auf jede einer Anzahl von Stützschalen, die eine für die Einlagerung und das Anbieten in der besagten Fleischtruhe des Einzelhandelsgeschäftes geeignete Größe aufweisen; Umgeben der Fleischstücke auf den Schalen mit einer vorgewählten Gasatmosphäre; anschließend Bedecken jeder der Schalen und des Fleischstückes oder der Fleischstücke auf jeder Schale mit einer flexiblen gasdurchlässigen Folie aus transparentem Kunststoff, so daß die Folie die vorgewählte Gasatmosphäre, welche die Fleischstücke umgibt, einschließt und sich an die Fleischstücke anschmiegt und diese eng umschließt, worauf die Folie mit der zugehörigen Schale verschweißt wird; Einbringen der Schalen in einen gasundurchlässigen Behälter, Entfernen der Luft, welche im Innern des Behälters die Schalen umgibt, während die das Fleisch auf jeder Schale umgehende vorgewählte Gasatmosphäre zurückbleibt, und Füllen des Raumes in dem undurchlässigen Behälter um die Schalen mit einer gesteuerten Gasatmosphäre, so daß die gasdurchlässige Folie während der Aufenthaltsdauer der Schale in dem Behälter weder platzt noch Falten bildet; und Versiegeln des Behälters zum Einschließen der gesteuerten Gasatmosphäre in demselben.

2. Verfahren zum Verpacken von Frischfleisch gemäß Anspruch 1, wobei die Fleischstücke auf den Stützschalen mit einer vorgewählten Gasatmosphäre umgeben werden, indem man jede Schale in einen länglichen, beidseitig offenen Schlauch aus einer gasdurchlässigen, transparenten Kunststoffolie einbringt; die die vorgewählte Gasatmosphäre bildenden Gase durch den länglichen, beidseitig offenen Schlauch von dessen einem Ende zu dessen anderem Ende durchleitet; den Schlauch neben einer Seite von jeder der besagten Schalen verschließt, während weiterhin Luft aus dem länglichen offenen Schlauch hinausgespült wird, indem man die die vorgewählte Gasatmosphäre bildenden Gase in das offene Ende desselben einleitet, und dann den Schlauch an der Seite, welche der zunächst geschlossenen Seite des Schlauches gegenüberliegt, verschließt, um die besagte Gasatmosphäre und die Fleischstücke vollständig einzuschließen.

3. Verfahren zum Verpacken von Frischfleisch gemäß den Ansprüchen 1 oder 2, bei welchem nach Entfernen der Luft aus dem gasundurchlässigen Behälter die erzeugte gesteuerte Gasatmosphäre im wesentlichen atmosphärischen Druck aufweist.

4. Verfahren gemäß den Ansprüchen 1, 2 oder 3, bei welchem die in den besagten gasundurchlässigen Behälter eingebrachte gesteuerte Gasatmosphäre Kohlendioxid ist.

## Revendications

Procédé pour emballer de la viande fraîche dans un état pour un stockage ultérieur et une présentation finale de détail, ledit procédé comprenant les étapes de découper la viande fraîche en des morceaux de taille, forme et poids appropriés pour être emballés et présentés aux acheteurs de détail dans un étalage de viande du détaillant; de placer au moins l'un desdits morceaux de viande sur chacune d'une pluralité de barquettes de support dimensionnées pour le dépôt et la présentation dans ledit étalage de viande du détaillant; d'entourer les morceaux de viande sur les barquettes par une atmosphère gazeuse présélectionnée; ensuite de recouvrir chacune des barquettes et le ou les morceaux de viande sur chaque barquette par un film flexible perméable aux gaz en un matériaux de résine synthétique transparent de sorte que le film enferme l'atmosphère gazeuse présélectionnée entourant les morceaux de viande et s'adapte de façon satisfaisante et intime sur les morceaux de viande et soit scellé hermétiquement à la barquette associée; de disposer lesdites barquettes dans un récipient imperméable aux gaz; de retirer l'air de l'intérieur du récipient et entourant les barquettes, tout en laissant ladite atmosphère gazeuse présélectionnée entourant la viande sur chaque barquette, et de remplir l'espace à l'intérieur du récipient imperméable et entourant les barquettes avec une atmosphère gazeuse contrôlée, de telle façon que le film perméable aux gaz n'éclate ni ne se plisse au cours du temps pendant lequel la barquette est à l'intérieur dudit récipient, et de sceller hermétiquement ledit récipient pour retenir à l'intérieur l'atmosphère gazeuse contrôlée.

2. Procédé pour emballer de la viande fraîche telle que défini à la revendication 1, dans lequel les morceaux de viande sur les barquettes de support sont entourés par une atmosphère gazeuse présélectionnée en disposant chaque barquette dans un tube allongé ouvert aux extrémités en un film synthétique transparent perméable aux gaz; de faire passer les gaz constituant ladite atmosphère gazeuse présélectionnée dans le tube allongé ouvert aux extrémités depuis l'une de ses extrémités en direction de l'autre; de fermer le tube en une position adjacente à un côté de chacune desdites barquettes, tout en maintenant le balayage d'air hors du tube allongé ouvert aux extrémités en faisant passer les gaz constituants l'atmosphère gazeuse présélectionnée dans l'extrémité ouvert de celui-ci, puis de fermer le tube du côté opposé de la barquette respective de l'endroit où le tube est d'abord fermé pour enfermer complètement ladite atmosphère gazeuse et les morceaux de viande.

3. Procédé pour emballer de la viande fraîche selon la revendication 1 ou 2, dans lequel, après avoir retiré l'air du récipient imperméable aux gaz, l'atmosphère gazeuse contrôlée introduite à l'intérieur est à une pression sensiblement atmosphérique.

4. Procédé selon la revendication 1, 2 ou 3, dans lequel, l'atmosphère gazeuse contrôlée introduite dans ledit récipient imperméable aux gaz est du dioxyde de carbone.